# EUROPÄISCHE PATENTSCHRIFT

(11) **EP 1 927 241 B1**
(45) Veröffentlichungstag und Bekanntmachung des Hinweises auf die Patenterteilung: **13.07.2016**
(21) Anmeldenummer: 06793006.5
(22) Anmeldetag: 25.08.2006
(51) Int. Cl.: H04M 3/42

(54) **VERFAHREN, KOMMUNIKATIONSENDEINRICHTUNG UND KOMMUNIKATIONSSYSTEM ZUM ANZEIGEN EINES EINER RUFNUMMER ZUGEORDNETEN ANZEIGENAMENS IM RAHMEN EINES VERBINDUNGSAUFBAUS**
METHOD, COMMUNICATION TERMINAL, AND COMMUNICATION SYSTEM FOR DISPLAYING A NAME ASSIGNED TO A TELEPHONE NUMBER WHEN A CONNECTION IS ESTABLISHED
PROCEDE, TERMINAL DE COMMUNICATION ET SYSTEME DE COMMUNICATION POUR AFFICHER UN NOM D'AFFICHAGE ASSOCIE A UN NUMERO D'APPEL DANS LE CADRE D'UN ETABLISSEMENT DE LIAISON

(30) Priorität: 21.09.2005 DE 102005045113
(43) Veröffentlichungstag der Anmeldung: 04.06.2008
(73) Patentinhaber: Unify GmbH & Co. KG, 81379 München (DE)
(72) Erfinder: SCHAADE, Stephan, 86807 Buchloe (DE)
(74) Vertreter: Fritzsche, Thomas
(86) Internationale Anmeldenummer: PCT/EP2006/065669
(87) Internationale Veröffentlichungsnummer: WO 2007/033883

(56) Entgegenhaltungen:
- EP-A2- 0 876 038
- GB-A- 2 381 992
- US-B1- 6 760 727
- ORACLE CORPORATION: "ORACLE ADVANCED INBOUND TELEPHONY 11i data sheet"[Online] Mai 2005 (2005-05), Seiten 1-6, XP002413418 Gefunden im Internet: URL:www.oracle.com/applications/crm/intera ctioncenter/11510_ai_ds.pdf> [gefunden am 2007-01-05]
- ORACLE CORPORATION: "ORACLE TELESERVICE 11I data sheet"[Online] Mai 2005 (2005-05), Seite 1-6, XP002413409 Gefunden im Internet: URL:http://www.oracle.com/applications/ser vice/11i10_ots_ds.pdf> [gefunden am 2007-01-08]

## Beschreibung

In modernen Kommunikationssystemen für Sprache können üblicherweise bei ein- und ausgehenden Verbindungen eine Rufnummer und/oder ein Name eines Kommunikationspartners auf dem Display eines Telefons ausgegeben werden.

Zur Übermittlung der Rufnummer wird bei ISDN-basierten Protokollen (ISDN: Integrated Services Digital Network) ein als CLIP (Calling Line Identification Presentation) bezeichnetes Verfahren zur Anzeige einer Anruferrufnummer eingesetzt. Ein der Rufnummer zugeordneter Name eines Teilnehmers wird dagegen häufig nicht mit übermittelt.

Für Endgeräte in privaten Netzen werden häufig durch die Nebenstellenanlage den Endgeräten oder deren Rufnummern Namen zugeordnet und konfiguriert. Im Rahmen einer Verbindung zwischen zwei Endgeräten der Nebenstellenanlage wird von der Nebenstellenanlage zu den Endgeräten zusätzlich der konfigurierte Name des jeweiligen Kommunikationspartners übermittelt und an den jeweiligen Endgeräten angezeigt. Wird dagegen eine Verbindung über eine Amtsleitung von einem externen Kommunikationspartner eines anderen privaten oder öffentlichen Netzes zu einem nebenstellenanlagen-internen Kommunikationspartner aufgebaut, kann die Nebenstellenanlage üblicherweise nicht den Namen eines nebenstellenanlagen-externen Kommunikationspartners anzeigen, da in der Nebenstellenanlage lediglich Daten für die Endgeräte der Nebenstellenanlage konfiguriert sind.

Weiterhin besitzen moderne Endgeräte zur Anzeige eines Namens eines Kommunikationspartners häufig einen internen Speicher, in dem eine Zuordnung von Rufnummern zu Namen gespeichert wird, wobei derartige Zuordnungen durch den Benutzer des Endgerätes manuell eingetragen werden. Bei einem eingehenden Ruf kann durch ein derartiges Endgerät anhand der signalisierten Rufnummer der zugehörige Namen ermittelt und an einem Display des Endgerätes anzeigt werden. Dieses Verfahren ist meist bei Mobilfunkendgeräten eines Mobilfunknetzes oder ISDN-Endgeräten eines öffentlichen Telefonnetzes realisiert, da in diesen Netzen üblicherweise nur die Rufnummernübertragung ohne Übermittlung von Namen erfolgt.

Nachteilig ist bei bestehenden Kommunikationssystemen und - endgeräten insbesondere, dass einem Teilnehmer häufig lediglich die Rufnummer eines Kommunikationspartners, aber kein Name des Kommunikationspartners angezeigt wird. Weiterhin ist nachteilig, dass zur Anzeige von Namen ein Konfigurationsaufwand von Endgeräten sehr groß ist, da häufig für jedes vorhandene Endgerät die Namensdaten von allen möglichen Kommunikationspartners eingerichtet und aktualisiert werden müssen.

In ORACLE CORPORATION: "ORACLE ADVANCED INBOUND TELEPHONY 11i data sheet"[Online] Mai 2005 (2005-05), Seiten 1-6, ist ein Software-Verbinder (software connector) beschrieben, der Telefonie in Anwendungen zur Pflege von Kundenbeziehungen integriert. In ORACLE CORPORATION: "ORACLE TELESERVICE 11I data sheet"[Online] Mai 2005 (2005-05), Seite 1-6, ist eine Call Center-Anwendung (contact center application) beschrieben, die eine effektive und personalisierte Kundendienstleistung bei reduzierten Kosten zur Verfügung stellt. In einem Fenster für Kundeninformation sind neben anderen Bereichen zwei Bereiche dargestellt, in denen neben anderen Schaltflächen jeweils Schaltflächen "Clear", "Create" und "Edit" vorhanden sind.

In EP 0876 038 A2 ist ein privates Kommunikationssystem "System HICOM 600" der Siemens Aktiengesellschaft beschrieben, bei dem in einer kommunikationssysteminternen Datenbasis eine Zuordnungs- oder Übersetzungstabelle eingerichtet ist. In dieser Übersetzungstabelle werden mittels betriebstechnischer Anweisungen die Namen der einzelnen internen Teilnehmer und der ihnen zugeordnete Teilnehmeranschluss bzw. dessen Rufnummer eingespeichert. Ergänzungen und Änderungen in der Übersetzungstabelle sind nur mit relativ aufwendigen betriebstechnischen Eingriffen vorzunehmen, so dass aus Gründen des Aufwandes eine Einspeicherung auf die internen, d.h. die unmittelbar an das Kommunikationssystem angeschlossenen, Teilnehmerstellen beschränkt bleiben muss.

Es ist Aufgabe der Erfindung die Anzeige einer Adressinformation mit einer endgeräteindividuellen Information auf einfache Weise für interne und externe Teilnehmer eines Kommunikationssystems bereitzustellen.

Gelöst wird diese Aufgabe durch ein Verfahren mit den Merkmalen des Patentanspruchs 1, durch ein Kommunikationssystem mit den Merkmalen des Patentanspruchs 10, sowie durch eine Verwendung einer Kommunikationsendeinrichtung mit den Merkmalen des Patentanspruchs 11.

Vorteilhafte Ausführungsformen und Weiterbildungen der Erfindung sind in den abhängigen Ansprüchen angegeben.

In dem erfindungsgemäßen Verfahren zum Zuordnen einer endgeräteindividuellen Information zu einer Adressinformation an einer ersten Kommunikationsendeinrichtung eines Kommunikationssystems wird im Rahmen einer Verbindung zwischen einer zweiten Kommunikationsendeinrichtung und der ersten Kommunikationsendeinrichtung die Adressinformation der zweiten Kommunikationsendeinrichtung an der ersten Kommunikationsendeinrichtung oder am Kommunikationssystem erfasst. Weiter wird überprüft, ob es sich bei der zweiten Kommunikationsendeinrichtung um eine kommunikationssystem-interne oder -externe Kommunikationsendeinrichtung handelt. Im Fall einer kommunikationssystem-externen Kommunikationsendeinrichtung wird in einer in dem Kommunikationssystem (PBX,...) gespeicherten Zuordnungstabelle (ZTAB) nach einem Eintrag für die Adressinformation (RUNO) gesucht. Im Fall eines von der Zuordnungstabelle (ZTAB) nicht umfassten Eintrags für die Adressinformation (RUNO) wird nach einer Eingabe einer endgeräteindividuellen Information diese an das Kommunikationssystem übermittelt und in dem Kommunikationssystem zusammen mit der Adressinformation in einer insbesondere kommunikationssystemzentralen Zuordnungstabelle gespeichert. Im Folgenden werden neben Ausführungen der Erfindung mit endgeräteindividueller Information auch illustrative Beispiele mit teilnehmerindividueller Information und teilnehmer- und endgeräteindividueller Information beschrieben.

Die zweite Kommunikationsendeinrichtung stellt insbesondere eine kommunikationssystem-externe Kommunikationsendeinrichtung dar, die Teil eines weiteren privaten oder öffentlichen Kommunikationssystems beziehungsweise Kommunikationssystems ist. Die Adressinformation ist insbesondere eine eindeutig einem Teilnehmer oder einer Kommunikationsendeinrichtung zuzuordnende Rufnummerninformation, die beispielsweise mittels CLIP zwischen den Kommunikationssystemen übertragen wird. Beispielsweise ist die Adressinformation abhängig von der Kommunikationsendeinrichtung oder vom Kommunikationssystem eine Information einer Telefonnummer, einer IP-Adresse (IP: Internet Protocol) und/oder einer E.164-Nummer gemäß der zugehörigen ITU-T-Empfehlung (ITU-T: Standardisierung-Gruppe der International Telecommunication Union). Die teilnehmer- und/oder endgeräteindividuellen Information ist beispielsweise ein Name eines der zweiten Kommunikationsendeinrichtung zugeordneten Teilnehmers oder eine Kennung oder Bezeichnung der zweiten Kommunikationsendeinrichtung und kann eine textuelle Zeichenkette, eine elektronische Grafik oder Bild-Datei, eine akustische Information wie eine Sprachaufzeichnung oder eine Tonfolge oder eine Kombination und/oder Abfolge der genannten Informationen sein.

Das Kommunikationssystem ist insbesondere eine Vermittlungsanlage, ein Router und/oder ein Gatekeeper oder eine Anordnung aus diesen und zugeordneten Kommunikationsendeinrichtungen. Die zweite Kommunikationsendeinrichtung ist insbesondere eine kommunikationssystem-externe Kommunikationsendeinrichtung, die nicht durch das Kommunikationssystem administriert und/oder verwaltet wird. Die Erfassung der Adressinformation erfolgt vorzugsweise im Kommunikationssystem im Rahmen einer Signalisierung der Verbindung - insbesondere einer Verbindungsaufbausignalisierung - oder während der aufgebauten Verbindung. Die Zuordnung der erfassten teilnehmer- und/oder endgeräteindividuellen Information zur Adressinformation erfolgt vorzugsweise im Kommunikationssystem während der Signalisierung der Verbindung, während der aufgebauten Verbindung oder nach Beendigung der Verbindung.

Die Erfindung ist insofern vorteilhaft, als dass durch das kommunikationssystem-gemäße oder insbesondere zentrale Abspeichern der Zuordnung von Adressinformation und teilnehmer- und/oder endgeräteindividuellen Information in der Zuordnungstabelle, die gespeicherten Daten im Kommunikationssystem für alle seine Kommunikationsendeinrichtungen zum Abfragen zur Verfügung gestellt werden können.

In einer vorteilhaften Weiterbildung der Erfindung kann im Rahmen eines Verbindungsaufbaus zwischen der zweiten Kommunikationsendeinrichtung und einer weiteren, kommunikationssystem-internen Kommunikationsendeinrichtung nach einem Erfassen der Adressinformation im Kommunikationssystem die zugeordnet gespeicherte teilnehmer- und/oder endgeräteindividuelle Information gelesen und an die weitere Kommunikationsendeinrichtung übermittelt werden.

Dabei ist insbesondere vorteilhaft, dass für viele oder alle kommunikationssystem-internen Kommunikationsendeinrichtungen auf dieselbe gespeicherte Zuordnung zugriffen werden kann und somit bei - der Zuordnung der Information nachfolgend ablaufenden - Verbindungen zu oder von der zweiten Kommunikationsendeinrichtung die gespeicherte teilnehmer- und/oder endgeräteindividuelle Information an die jeweilige kommunikationssystem-internen Kommunikationsendeinrichtung übermittelt wird.

Vorzugsweise kann in einer vorteilhaften Ausführungsform der Erfindung die eingegebene und/oder übermittelte teilnehmer- und/oder endgeräteindividuelle Information an der weiteren Kommunikationsendeinrichtung visuell und/oder akustisch ausgegeben werden. Sofern es sich beispielsweise bei der teilnehmer- und/oder endgeräteindividuelle Information um eine Namensinformation eines Teilnehmers der zweiten Kommunikationsendeinrichtung handelt, kann diese Namensinformation an einem Display oder über einen Lautsprecher der weiteren Kommunikationsendeinrichtung ausgegeben werden, wodurch der Teilnehmer der weiteren Kommunikationsendeinrichtung auf komfortable Weise über den Namen seines Kommunikationspartners informiert wird.

Als erste oder als weitere Kommunikationsendeinrichtung kann insbesondere ein Telefon, ein Datenendgerät, einer der Kommunikationsendeinrichtung zugeordneten Datenverarbeitungseinrichtung - vorzugsweise ein PC oder ein PDA (PDA: Personal Digital Assistant) -, eine Kommunikationsanwendung - beispielsweise ein so genannter Soft-Client - einer Datenverarbeitungseinrichtung und/oder eine Kombination derartiger Endeinrichtungen vorgesehen sein. Bei Kombinationen derartiger Endeinrichtungen befinden sich die Endeinrichtungen vorteilhafterweise in einem gemeinsamen Umfeld, beispielsweise auf einem gemeinsamen Schreibtisch, so dass sie von einem Teilnehmer abwechselnd oder gleichzeitig bedient werden können.

Die Eingabe der teilnehmer- und/oder endgeräteindividuelle Information kann mittels eines Text- oder Spracheingabemittels durchgeführt werden, wobei vor der Speicherung in der Zuordnungstabelle im Rahmen einer weiteren Komfortsteigerung für die Teilnehmer eine Umwandlung von Textinformation mittels Sprachsynthese zu Toninformationen, eine Umwandlung von Schriftinformation mittels Schrifterkennung in Textinformation oder eine Umwandlung von Sprachinformation mittels Spracherkennung in Textinformation vorgesehen sein kann.

Darüber hinaus kann in einer weiteren vorteilhaften Ausführungsform der Erfindung vorgesehen sein, dass an der weiteren Kommunikationsendeinrichtung die übermittelte teilnehmer- und/oder endgeräteindividuelle Information.durch eine weitere Eingabe geändert, ergänzt und/oder gelöscht und somit korrigiert werden kann. Diese geänderte und/oder ergänzte teilnehmer- und/oder endgeräteindividuellen Information kann in der Zuordnungstabelle des Kommunikationssystems gespeichert werden oder die gelöschte teilnehmer- und/oder endgeräteindividuellen Information kann aus der Zuordnungstabelle des Kommunikationssystems entfernt werden. Dadurch lassen sich inkorrekte Einträge in der Zuordnungstabelle auf einfach Weise korrigieren.

Das Verfahren gemäß einer der vorstehend genannten Ausführungsformen oder einer Kombination dieser ist insofern vorteilhaft, als dass Teilnehmern von kommunikationssysteminternen Kommunikationsendeinrichtungen Information angezeigt werden können, die sie beim Durchführen der Verbindung unterstützen. Weiterhin ist vorteilhaft, dass allen kommunikationssystem-internen Kommunikationsendeinrichtungen dieselbe Information angezeigt wird, sobald sie mit derselben zweiten Kommunikationsendeinrichtung über eine Verbindung kommunizieren. Darüber hinaus erweist sich als vorteilhaft, dass die angezeigte Information von einigen oder jedem der kommunikationssystem-internen Kommunikationsendeinrichtungen modifiziert, verbessert und/oder aktualisiert werden kann.

Ein Ausführungsbeispiel der Erfindung wird nachfolgend anhand einer Zeichnung näher erklärt.

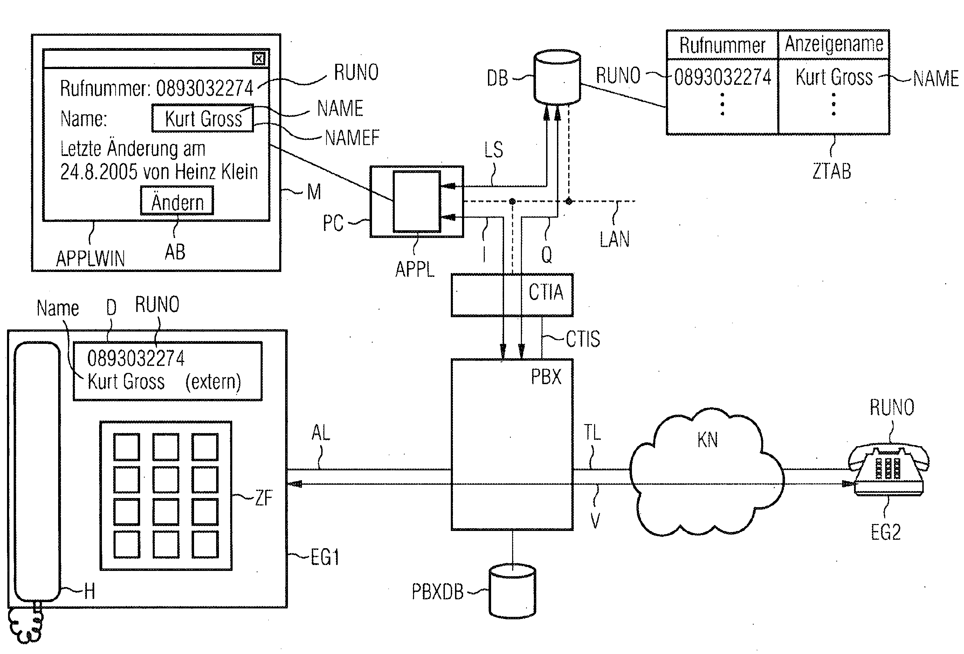

Dabei zeigt in schematischer Darstellung die
- Figur 1: ein Kommunikationssystem mit einer Kommunikationsendeinrichtung zur Durchführung des erfindungsgemäßen Verfahrens, sowie eine an das Kommunikationssystem gekoppelte kommunikationssystem-externe Kommunikationsendeinrichtung.

Die Figur 1 zeigt in schematischer Darstellung ein Kommunikationssystem zur Sprach-Echtzeitkommunikation mit einer als Rechteck dargestellten Vermittlungsanlage PBX und einem, über eine Anschlussleitung AL an die Vermittlungsanlage PBX angekoppelten, ersten Telefon EG1 als erste Kommunikationsendeinrichtung. Das Kommunikationssystem stellt beispielsweise ein privates Kommunikationsnetz dar, bei dem mehrere Telefone - auch das erste Telefon EG1 - an die Vermittlungsanlage PBX anschließbar sind. Weiterhin sei angenommen, dass die Vermittlungsanlage PBX über eine Amtsleitung TL mit einem zweiten Telefon EG2 als zweite Kommunikationsendeinrichtung eines öffentlichen Kommunikationsnetzes KN verbunden werden kann. Dem zweiten Telefon EG2 ist eine Rufnummer RUNO als Adresse zugeordnet. Diese Rufnummer RUNO ist im Folgenden 089 303 2274.

Weiterhin ist an die Vermittlungsanlage PBX eine Vermittlungsanlagen-Datenbank PBXDB angeschlossen, in der vermittlungsanlageninterne teilnehmer-, endgeräte- und/oder verbindungsbezogene Daten gespeichert werden. An die Vermittlungsanlage PBX ist weiterhin eine CTI-Applikation CTIA (CTI: Computer Telephony Integration) gekoppelt und an diese wiederum eine Datenbank DB zur Speicherung einer Zuordnungstabelle ZTAB, wobei in einem Datensatz der Zuordnungstabelle ZTAB jeweils eine Rufnummer RUNO und eine zusätzliche Information als Namensinformation, als Anzeigeinformation oder als teilnehmer- und/oder endgeräteindividuellen Information gespeichert werden.

Die CTI-Applikation CTIA, die Datenbank DB und ein Arbeitsplatzrechner PC sind über ein durch eine gestrichelte Linie angedeutetes lokales Netzwerk LAN miteinander gekoppelt. Die Kopplung zwischen der CTI-Applikation CTIA und der Vermittlungsanlage PBX erfolgt über eine als durchgehende Linie zwischen diesen beiden Komponenten dargestellte CTI-Schnittstelle CTIS und dabei insbesondere mittels des von der ECMA (European Computer Manufacturers Association) standardisierten CSTA-Protokolls (CSTA: Computer Supported Telecommunications Application), über das die CTI-Applikation CTIA über die vermittlungstechnischen Zustände und Zustandswechsel der Vermittlungsanlage PBX informiert wird. Die CTI-Applikation CTIA kann auf einem eigenen Rechner, in der Vermittlungsanlage PBX oder auf dem Arbeitsplatzrechner PC realisiert werden.

In Figur 1 ist das erste Telefon EG1 als Tastentelefon, mit einem Wahlziffernfeld ZF und einem Display D sowie mit einem Telefonhörer H dargestellt.

Der Arbeitsplatzrechner PC bildet zusammen mit dem ersten Telefon EG1 gemeinsam die erste Kommunikationsendeinrichtung eines Teilnehmers. Beide Geräte befinden sich an einem gemeinsamen, nicht dargestellten Arbeitsplatz des Telnehmers. Die auf dem ersten Arbeitsplatzrechner PC ablaufende Anwendung APPL ist als Rechteck innerhalb des Arbeitsplatzrechners PC veranschaulicht. Ein Monitor M des Arbeitsplatzrechners PC ist durch ein Rechteck angedeutet, wobei auf Monitor M Ausgaben der Anwendung APPL innerhalb eines als Rechteck dargestellten Anwendungsfenster APPLWIN visualisiert ist.

Bildschirmausgaben der Anwendung APPL werden im Anwendungsfenster APPLWIN dargestellt, wobei im Ausführungbeispiel folgende Fensterkomponenten einer grafischen Benutzeroberfläche dargestellt sind:
- Ein mit dem Text "Rufnummer" beschriftetes Textfeld zur Ausgabe einer Rufnummer eines Anrufers zum ersten Telefon EG1,
- ein mit dem Text "Name" beschriftetes Namenseingabefeld NAMEF zur Eingabe eines der Rufnummer zugeordneten Namens,
- ein mit dem Text "Letzte Änderung" beschriftetes Textfeld zur Ausgabe eines Datums und eines Anwender-Namens, der den Text in das Namenseingabefeld NAMEF zum angegebenen Datum - eventuell auf einem anderen Arbeitsplatzrechner - eingetragen hat, und
- ein mit dem Text "Ändern" beschrifteter Auslöse-Schaltknopf AB zum Starten einer Aktionen zum Zuweisen des eingegebenen Namens zu der angezeigten Rufnummer durch den Teilnehmer bzw. den Benutzer des Arbeitsplatzrechners PC.

Die Anwendung APPL ist beispielsweise eine permanent auf dem Arbeitsplatzrechner PC laufende Applikation, die beispielsweise über einen so genannten Socket des Rechners Meldungen von der CTI-Applikation CTIA empfangen und auf diese reagieren kann, sowie Informationen von dieser ins Anwendungsfenster APPLWIN schreiben kann, wobei die CTI-Applikation CTIA ein Aktivieren oder Starten der Anwendung APPL initiieren kann.

Die Vermittlungsanlage PBX und die beiden Telefone EG1, EG2 sind zur leitungsvermittelten Echtzeitkommunikation vorgesehen. Alternativ zu den dargestellten Festnetztelefonen kann darüber hinaus eine auf dem Arbeitsplatzrechner PC ablaufende Telefonapplikation - ein so genannter Soft-Client - oder mobile Kommunikationsendeinrichtungen vorgesehen sein bzw. werden. Die Vermittlungsanlage PBX kann auch auf paketorientierten Prinzipien basieren, wobei eine paketorientierte Vermittlungsanlage PBX oder auch ein Gatekeeper, Gateway oder Kommunikationsserver integriert werden kann.

Im Folgenden werden Meldungen oder Verbindungen zwischen den vorstehend genannten Komponenten mit V, Q, I, LS bezeichnet und durch Linien mit Doppelpfeil dargestellt.

Die in Figur 1 dargestellten Werte für die Zuordnungstabelle ZTAB, für die Inhalte des Anwendungsfensters APPLWIN und für die Inhalte des Displays D des ersten Telefons EG1 stellen die Werte in einem später erläuterten Zwischenschritt des Verfahrens dar. Als Ausgangssituation für den in Figur 1 dargestellten Systemzustand wird angenommen, dass für die Rufnummer RUNO kein Eintrag in der Zuordnungstabelle ZTAB vorhanden ist, dass das Anwendungsfenster APPLWIN auf dem Monitor nicht sichtbar ist und dass an dem Display D eine Ausgabe eines Ruhezustandes des ersten Telefons EG1 anzeigt wird.

In Figur 1 wird ein Verbindungsaufbau zwischen dem ersten Telefon EG1 und dem zweiten Telefon EG2 initiiert. Hierbei ist es unerheblich, welche der beiden Telefone EG1, EG2 den Verbindungsaufbau V eingeleitet hat und ob eine Verbindung V bereits durchgeschaltet oder noch im Rufaufbau befindlich ist. Da das zweite Telefon EG2 außerhalb des Kommunikationssystems, gebildet aus der Vermittlungsanlage PBX, dem ersten Telefon EG1, der CTI-Applikation CTIA, den Datenbanken DB, PBXDB und weiteren, nicht dargestellten Kommunikationsendeinrichtungen, wird im Rahmen der Verbindung V lediglich die Rufnummer RUNO des zweiten Telefons EG2 zur Vermittlungsanlage PBX übermittelt. Eine weitere, beispielsweise textuelle Information wie ein Name eines Teilnehmers des zweiten Telefon EG2 wird nicht übermittelt, da im vorliegenden Ausführungsbeispiel davon ausgegangen wird, dass das Kommunikationsnetz KN eine derartige textuelle Information nicht übermitteln kann und/oder dem zweiten Telefon EG2 im Kommunikationsnetz KN kein Name zugeordnet ist.

Die Verbindung V wird durch die Vermittlungsanlage PBX zwischen dem ersten Telefon EG1 und dem zweiten Telefon EG2 aufgebaut. Die in einer Signalisierung der Verbindung V enthaltene und mittels CLIP übermittelte Rufnummer RUNO des zweiten Telefons EG2 wird durch die Vermittlungsanlage PBX erfasst und zum ersten Telefon EG1 übermittelt und dort daraufhin im Display D angezeigt.

Weiterhin wird in der Vermittlungsanlage PBX die Rufnummer RUNO dahingehend überprüft, ob es sich bei dem zweiten Telefon EG2 um eine kommunikationssystem-interne oder um eine kommunikationssystem-externe Kommunikationsendeinrichtung handelt. Handelt es sich um eine kommunikationssystem-interne Kommunikationsendeinrichtung - im Ausführungsbeispiel nicht der Fall -, ist für das Ausführungsbeispiel angenommen, dass eine der Kommunikationsendeinrichtung zugeordnete, konfigurierte Namensinformation in der Vermittlungsanlagen-Datenbank PBXDB vorliegt. Das erfindungsgemäße Zuordnen einer teilnehmer- und/oder endgeräteindividuellen Information zur Adressinformation und die Eingabe von Zeichen zum Bilden der teilnehmer- und/oder endgeräteindividuellen Information im Rahmen einer Verbindung wird hierbei unterdrückt oder gesperrt, da die konfigurierte Namensinformationen aus der Vermittlungsanlagen-Datenbank PBXDB bevorzugt ausgegeben und diese nicht geändert werden sollen. Im vorliegenden Ausführungsbeispiel handelt es sich dagegen beim zweiten Telefon EG2 um eine kommunikationssystem-externe Kommunikationsendeinrichtung, für die eine im Display D anzuzeigende Namensinformation als teilnehmer- und/oder endgeräteindividuelle Information über die Zuordnungstabelle ZTAB ermittelt wird.

Zur Ermittlung einer der Rufnummer RUNO zugeordneten Namensinformation für das zweite Telefon EG2 wird von der Vermittlungsanlage PBX eine Abfrageverbindung Q direkt oder über die CTI-Applikation CTIA zur Datenbank DB aufgebaut. Über diese Abfrageverbindung Q wird eine Datenbankabfrage zur Datenbank DB mit der in der Verbindung V übermittelten Rufnummer RUNO als Suchparameter abgesetzt. Mittels dieses Suchparameters wird durch die Datenbank DB in der Zuordnungstabelle ZTAB nach einem Eintrag gesucht. Da in der Zuordnungstabelle ZTAB kein Eintrag für die Rufnummer RUNO gefunden werden kann, wird in der Abfrageverbindung Q eine negative Quittung an die Vermittlungsanlage PBX übermittelt. Optional wird dem ersten Telefon EG1 ebenfalls eine negative Quittung übermittelt. Eine der Rufnummer RUNO zugeordneten Namensinformation wird dem ersten Telefon EG1 nicht signalisiert. Deshalb findet eine Ausgabe einer derartigen Namensinformation am ersten Telefon EG1 nicht statt.

Infolge der Initiierung der Verbindung V wird über die Vermittlungsanlage PBX die CTI-Applikation CTIA über diese aufzubauende Verbindung V mittels einer CTI-Meldung informiert. Diese CTI-Meldung zur CTI-Applikation CTIA im Rahmen der Aufrufverbindung I von der Vermittlungsanlage PBX zum Arbeitsplatzrechner PC umfasst vorzugsweise die Rufnummer RUNO und eventuell weitere vermittlungsanlagen- und/oder verbindungsspezifische Daten.

Die CTI-Applikation CTIA erfasst die in der CTI-Meldung übermittelten Daten. In einem darauf folgenden - nicht dargestellten - Verfahrensschritt kann die CTI-Applikation CTIA den dem ersten Telefon EG1 zugeordneten Arbeitsplatzrechner PC und/oder die zugeordnete Anwendung APPL ermitteln. Darüber hinaus wird durch die CTI-Applikation CTIA versucht einen Datensatz aus der Zuordnungstabelle ZTAB für die Rufnummer RUNO zu ermittelt - nicht dargestellt. Da die Zuordnungstabelle ZTAB in diesem Ausführungsschritt keinen Eintrag für die Rufnummer RUNO umfasst, kann kein Datensatz für die Rufnummer RUNO gefunden werden.

Darauf folgend wird durch die CTI-Applikation CTIA eine Meldung zusammen mit ermittelten, zur Anzeige am Arbeitsplatzrechner PC vorgesehenen Informationen zur Anwendung APPL des Arbeitsplatzrechner PC im Rahmen der Aufrufverbindung I übermittelt. Die Anwendung APPL ist dabei ein permanent laufender Prozess oder wird durch die CTI-Applikation CTIA gestartet oder aufgeweckt. Es wird daraufhin das Anwendungsfenster APPLWIN geöffnet und auf dem Monitor M angezeigt. Falls erwünscht könnte die Anwendung APPL nun weitere teilnehmerund/oder verbindungsbezogene Daten über die CTI-Applikation CTIA oder die Datenbank DB abfragen - nicht dargestellt.

Die Adressierung der Anwendung APPL durch die CTI-Applikation CTIA erfolgt beispielsweise über eine ermittelte Rechner-IP-Adresse für den Arbeitsplatzrechner PC und einer vorgegebenen Port-Nummer. Das Aktivieren der Anwendung APPL erfolgt beispielsweise über einen so genannten "Remote Procedure Call" RPC.

Im Anwendungsfenster APPLWIN der aktivierten Anwendung APPL wird daraufhin die Rufnummer RUNO sowie ein leeres Namenseingabefeld NAMEF angezeigt. Daraufhin erhält ein Benutzer bzw. der Teilnehmer die Kontrolle über das Anwendungsfenster APPLWIN. Der Benutzer des Arbeitsplatzrechners PC und des ersten Telefons EG1 kann daraufhin in dieses Namenseingabefeld NAMEF einen Text eintragen, bevorzugt den Namen des Teilnehmers des zweiten Telefons EG2.

Eine Eingabe in das Namenseingabefeld NAMEF durch den Benutzer des Arbeitsplatzrechners PC und des ersten Telefons EG1 kann während verschiedener Stadien der Verbindung V, beispielsweise beim Aufbau, nach Durchschaltung aber auch nach Beendigung der Verbindung V durchgeführt werden.

Infolge des Auslösens des Ändern-Schaltknopf AB kann die Anwendung APPL erste Gültigkeitsprüfungen zur Eingabe durchführen und darauf folgend die Rufnummer RUNO und die eingegebene Zeichenkette im Namenseingabefeld NAMEF über eine Lese-/Schreibverbindung LS zur Datenbank DB und zur Zuordnungstabelle ZTAB übermitteln. In der Zuordnungstabelle TZAB wird aus den übermittelten Daten ein Datensatz gebildet und gespeichert. Ein bereits existierender Datensatz für die Rufnummer RUNO würde überschrieben bzw. aktualisiert werden. Neben der Rufnummer RUNO des zweiten Telefons EG2 und der Namensinformation NAME des Teilnehmers des zweiten Telefon EG2 wird durch die Zuordnungstabelle ZTAB der Namen des die Eingabe durchführenden Benutzers und das Datum der Eingabe gespeichert - letzteres beides nicht dargestellt.

Nach Abspeichern des Datensatzes wird über die Aufrufverbindung I an die Vermittlungsanlage PBX die Namensinformation NAME übermittelt. Die Vermittlungsanlage PBX übermittelt diese Namensinformation NAME zum ersten Telefon EG1 zur Anzeige an dessen Display D und hängt, zur Unterscheidung zu konfigurierten kommunikationssystem-internen Namensinformationen eine Zusatz-Zeichenkette "(extern)" an die Namensinformation NAME. Daraufhin wird die Namensinformation NAME zusammen mit Zusatz-Zeichenkette im Display D angezeigt.

Durch die vorstehend genannten Verfahrensschritte wird es ermöglicht, einem kommunikationssystem-externen Teilnehmer bzw. einer Kommunikationsendeinrichtung eine frei vergebbare zusätzliche Information zur Rufnummer zentral zuzuweisen und an einer kommunikationssystem-internen Kommunikationsendeinrichtung anzuzeigen. Wie diese gespeicherte Information für weitere Verbindungen und für weitere kommunikationssysteminternen Kommunikationsendeinrichtungen zur Anzeige zur Verfügung steht, wird im Folgenden beschrieben.

Vorausgesetzt ist hierbei, dass, wie vorstehend beschrieben, die Zustandstabelle ZTAB einen Eintrag für die Rufnummer RUNO umfasst. Die Rufnummer RUNO des zweiten Telefons EG2 ist 089 303 2274 und die in der Zuordnungstabelle ZTAB zugeordnete Namensinformation NAME des Teilnehmers des zweiten Telefons EG2 ist "Kurt Gross". Der Eintrag in die Zuordnungstabelle ZTAB wurde zuletzt durch den Teilnehmer "Heinz Klein" am 24.8.2005 erzeugt oder geändert.

Bei einem erneuten Verbindungsaufbau V vom zweiten Telefon EG2 zum ersten Telefon EG1 oder zu einem weiteren Telefon des Kommunikationssystems, wird die Rufnummer RUNO zur Vermittlungsanlage PBX übermittelt und weiter zum ersten Telefon EG1 zum Anzeigen am Display D. Nach bereits beschriebenen Mechanismen wird durch die Vermittlungsanlage PBX die Rufnummer RUNO erfasst die Zuordnungstabelle ZTAB für diese Rufnummer RUNO abgefragt. In diesem Fall wird für die Rufnummer RUNO ein Eintrag in der Zuordnungstabelle ZTAB gefunden und erfasst. Die der Rufnummer RUNO zugeordnete Namensinformation "Kurt Gross" des erfassten Eintrags wird ausgelesen und der Vermittlungsanlage PBX zurückgeliefert. Daraufhin wird durch die Vermittlungsanlage PBX die Namensinformation durch Anhängen der Zeichenkette "(extern)" modifiziert und zur Darstellung am Display D zum ersten Telefon EG1 übermittelt.

Durch diese Verfahrensschritte wird somit neben der Rufnummer RUNO auch eine teilnehmer- und/oder endgeräteindividuelle Information, nämlich "Kurz Gross (extern)" ausgegeben. Durch das Hinzufügen der Zeichenkette "(extern)" wird dem Benutzer kenntlich gemacht, dass es sich bei der ausgegebenen Namensinformation NAME nicht um eine konfigurierte und somit auch nicht um eine sehr zuverlässige Namensinformation handelt, sondern um eine durch einen von vielen Benutzern bzw. Teilnehmern des Kommunikationssystems eingegebene Namensinformation handelt, die eventuell unfreiwillig oder absichtlich fehlerbehaftet ist.

Um fehlerbehaftete Einträge in der Zuordnungstabelle ZTAB zu korrigieren, besteht für den Benutzer des ersten Telefons EG1 die Möglichkeit, in folgend beschriebenen Verfahrensschritten die angezeigte Namensinformation NAME zu editieren. Zur Bereitstellung von Mitteln zur Durchführung einer derartigen Korrektur der gespeicherten Namensinformation NAME werden die ermittelten Daten aus der Zuordnungstabelle ZTAB für die Rufnummer RUNO analog zu vorstehend erläuterten Verfahrensschritten über die Aufrufverbindung I zur Anwendung APPL übermittelt und im Anwendungsfenster APPLWIN dargestellt. In diesem wird, wie in Figur 1 dargestellt, folgende Zeichenkette ausgegeben:
Rufnummer: 089 303 2274
Name: Kurt Gross
Letzte Änderung am 24.8.2005
von Heinz Klein

Das Namenseingabefeld NAMEF mit dem Inhalt "Kurt Gross" ist dabei ein überschreibbares Eingabefeld. In diesem kann der Benutzer Korrekturen oder Ergänzungen durchführen, sofern er die Namensinformation für falsch oder verbesserungswürdig hält. Beispielsweise kann der Benutzer die Namensinformation NAME "Kurt Gross" in die Zeichenkette "Kurt Georg Gross" ändern und die Änderung durch Betätigen des Ändern-Schaltknopfes AB bestätigen und beenden.

Daraufhin wird vom Arbeitsplatzrechner PC die Lese-/Schreibverbindung LS zur Datenbank DB aufgebaut um den gespeicherten, der Rufnummer RUNO zugeordneten Datensatz in der Zuordnungstabelle ZTAB zu aktualisieren oder zu überschreiben. Aktualisiert werden insbesondere die eingegebene Namensinformation, das Datum der letzten Änderungen und der Name des Benutzers, der die Änderung durchgeführt hat.

Infolge einer positiven Bestätigung von der Datenbank DB wird über die Aufrufmeldung I vom Arbeitsplatzrechner PC der Vermittlungsanlage PBX die geänderte Namensinformation übermittelt. In der Vermittlungsanlage PBX wird daraufhin die Zeichenkette "(extern)" um die Namensinformation ergänzt und an das erste Telefon EG1 zur Ausgabe auf dem Display D übermittelt. Dies ist im vorliegenden Ausführungsbeispiels die Zeichenkette "Kurt Georg Gross (extern)".

Das Verfahren ist insofern vorteilhaft, als dass kommunikationssystem-weite teilnehmer- und/oder endgeräteindividuelle Informationen insbesondere für kommunikationssystem-externe Kommunikationspartner von den Benutzern des Kommunikationssystems eingegeben, korrigiert und gespeichert werden können. Somit können Firmen, die wiederholt mit den gleichen externen Kommunikationspartner Kommunikationsverbindungen durchführen und dies weiterhin über unterschiedliche Kontaktpersonen der Firma durchgeführt wird, für diese externe Kommunikationspartner Informationen zuordnen, die den Benutzern kommunikationssystem-interner Kommunikationsendeinrichtungen angezeigt werden. Weiterhin können neben der Namensinformation oder alternativ zu der Namensinformation weitere Informationen eingegeben, gespeichert und angezeigt werden, die den kommunikationssystem-internen Benutzern bei einem Verbindungsaufbau angezeigt werden oder an die Anwendungen auf den Arbeitsplatzrechnern zur Weiterverarbeitung übermittelt werden.

Beispielsweise kann auf dem Arbeitsplatzrechner ein Protokollsystem installiert sein, bei dem der Benutzer zu jedem geführten Gespräch Notizen in einer Art Protokoll eintragen kann. Diese Notizen können in der Zuordnungstabelle ZTAB gespeichert werden und bei einem weiteren Verbindungsaufbau zusammen mit der Namensinformation angezeigt werden.

Vorteilhafterweise kann einem Datensatz in der Zuordnungstabelle ZTAB eine Zeitinformation zugeordnet werden - insbesondere das vorstehend genannte Datum der letzten Änderung - und diese Zeitinformation mit einer Referenzzeitinformation verglichen werden. Die Referenzzeitinformation ist beispielsweise das aktuelle Datum minus einem Jahr. Sobald diese Referenzzeitinformation größer als die gespeicherte Zeitinformation ist, ist seit der letzten Änderung des Datensatzes mehr als ein Jahr vergangen. Daraufhin kann programmgesteuert eine Aktion ausgeführt werden. Beispielsweise kann die Anzeige der Namensinformation NAME im Display D markiert oder modifiziert dargestellt werden um dem Benutzer anzuzeigen, dass die angezeigte Namensinformation NAME eventuell veraltet ist. Weiterhin kann im Anwendungsfenster APPLWIN eine Ausgabe "Der Eintrag ist möglicherweise veraltet. Bitte bestätigen Sie die Richtigkeit des Eintrags!" dargestellt werden. Durch Drücken eines Auslöseschaltknopfs im Anwendungsfenster APPLWIN kann dieser Datensatz erneut als gültig markiert werden. Der Datensatz erhält daraufhin eine neue Zeitinformation - das aktuelle Datum - zugewiesen und wird als aktuell betrachet.

Darüber hinaus kann in regelmäßigen Abständen eine Routine über alle Datensätze der Zuordnungstabelle ZTAB ablaufen, um die jeweilige Zeitinformation auszulesen und mit einer weiteren Referenzzeitinformation zu vergleichen. Wird durch den Vergleich erkannt, dass der Datensatz beispielsweise mehr als zwei Jahre ungeändert gespeichert ist, eine Aktualisierung der Gültigkeit nicht durchgeführt wurde und der Datensatz nicht ausgegeben wurde, kann die Routine den zugehörigen Datensatz aus der Zuordnungstabelle ZTAB löschen. Somit können nicht aktualisierte, veraltete oder selten benutze Datensätze gelöscht werden und somit die Größe der Zuordnungstabelle ZTAB beschränkt werden.

Während die Erfindung im Ausführungsbeispiel anhand von Sprachendgeräten erläutert wurde, kann es sich bei der Kommunikationsendeinrichtungen auch um eine Video- oder Multimediaendeinrichtungen oder um Datenendeinrichtungen wie Faxgeräte handeln. Weiterhin kann es sich beim ersten Telefon EG1 um eine Software-Telefonieanwendung auf dem Arbeitsplatzrechner PC handeln. Weiterhin kann als Kommunikationsverfahren ein leitungsvermitteltes oder ein paketorientiertes Verfahren eingesetzt werden und können die Telefone EG1, EG2 leitungsvermittelte Endgeräte oder paketorientierte Endgeräte sein.

Darüber hinaus kann die Zuordnungstabelle ZTAB alternativ zur dargestellten Ausführungsform in einem zentralen Speicher oder in der Vermittlungsanlagendatenbank PBXDB des Kommunikationssystems gespeichert werden.

Des Weiteren können in die Zuordnungstabelle ZTAB nicht nur vom Arbeitsplatzrechner PC aus, sondern auch vom ersten Telefon EG1 direkt die zusätzlichen Informationen wie Namensinformation eingetragen werden. Hierbei ist jedoch eine Kommunikationsendeinrichtung vorzusehen, mit der eine Eingabe von Informationen wie Namen möglich ist. Des Weiteren ist eine Eingabeprozedur vorzusehen, die im Rahmen des Verbindungsaufbaus, während der Verbindung oder nach der Verbindung die Eingabe von zusätzlichen Informationen und die Speicherung dieser Informationen in der Zuordnungstabelle ermöglicht.

## Patentansprüche

1. Verfahren zum Zuordnen einer Information (NAME) zu einer Adressinformation (RUNO) an einer ersten Kommunikationsendeinrichtung (EG1, PC) eines Kommunikationssystems, wobei das Kommunikationssystem eine Rufweiterleitungsvorrichtung in Form einer Vermittlungsanlage (PBX), eines Routers oder eines Gatekeepers, eine VermittlungsanlagenDatenbank (PBXDB), und eine weitere, über eine CTI-Applikation mit der Vermittlungsanlage (PBX) gekoppelte Datenbank (DB) umfasst, im der Daten vermittlungsanlageninterner Kommunikationsendeinrichtungen (EG1, PC) gespeichert werden, **gekennzeichnet dadurch, dass** in der weiteren Datenbank Daten in Form einer Zuordnungstabelle (ZTAB) gespeichert werden, die die Adressinformation (RUNO) von vermittlungsexternen Kommunikationsendeinrichtungeh (EG2) entsprechenden endgeräteindividuellen Informationen (NAME) zuordnet, bei dem
- im Rahmen einer Verbindung (V) zwischen einer zweiten Kommunikationsendeinrichtung (EG2) und der ersten Kommunikationsendeinrichtung (EG1, PC) die Adressinformation (RUNO) der zweiten Kommunikationsendeinrichtung (EG2) an der ersten Kommunikationsendeinrichtung (EG1, PC) oder durch die Rufweiterleitungsvorrichtung des Kommunikationssystems erfasst wird,
- in der Rufweiterleitungsvorrichtung anhand der Adressinformation (RUNO) überprüft wird, ob es sich bei der zweiten Kommunikationsendeinrichtung (EG2) um eine kommunikationssystem-interne oder -externe Kommunikationsendeinrichtung handelt,
- im Fell einer kommunikationssystem-internen Kommunikationsendeinrichtung (EG1, PC) die endgeräteindividuellen Daten aus der Vermittlungsanlagen-Datenbank (PBXDB) am ersten Kommunikationsendgerät (EG1, PC) ausgegeben werden,
- im Fall einer kommunikationssystem-externen Kommunikationsendeinrichtung (EG2) von der Rufweiterleitungsvorrichtung eine Abfrageverbindung (Q) zu der Datenbank (DB) aufgebaut und über die Abfrageverbindung (Q) eine Datenbankabfrage zur Datenbank (DB) derart abgesetzt wird, dass in der Zuordnungstabelle (ZTAB) nach einem Eintrag für die Adressinformation (RUNO) gesucht wird, und
- an der ersten Kommunikationsendeinrichtung (EG1, PC) der Eintrag für die Adressinformation (RUNO) derart angezeigt wird, dass die endgeräteindividuelle Information (NAME) geändert oder, falls die Zuordnungstabelle (ZTAB) keinen Eintrag für die Adressinformation (RUNO) umfasst, eingegeben werden kann, und dass nach erfolgter Eingabe oder Änderung diese Information (NAME) zusammen mit der Adressinformation (RUNO) in der Zuordnungstabelle (ZTAB) gespeichert wird.

2. Verfahren nach Anspruch 1,
wobei im Rahmen eines weiteren Verbindungsaufbaus zwischen der zweiten Kommunikationsendeinrichtung (EG2) und der ersten Kommunikationsendeinrichtung (EG1, PC) oder einer weiteren Kommunikationsendeinrichtung, nach einem Erfassen der Adressinformation (RUNO) im Kommunikationssystem die zugeordnet gespeicherte endgeräteindividuelle Information (NAME) ausgelesen und an die erste Kommunikationsendeinrichtung (EG1, PC) oder die weitere Kommunikationsendeinrichtung übermittelt wird.

3. Verfahren nach Anspruch 2,
wobei an der weiteren Kommunikationsendeinrichtung die übermittelte endgeräteindividuelle Information (NAME) durch eine weitere Eingabe geändert und/oder ergänzt wird und diese geänderte und/oder ergänzte endgeräteindividuellen Information über die Lese-/Schreibverbindung (LS) an die Datenbank (DB) übermittelt und in der Zuordnungstabelle (ZTAB) des Kommunikationssystems gespeichert wird.

4. Verfahren nach einem der vorhergehenden Ansprüche, wobei die endgeräteindividuellen Information (NAME) an der ersten Kommunikationsendeinrichtung (EG1, PC), einer weiteren Kommunikationsendeinrichtung, einer der ersten Kommunikationsendeinrichtung zugeordneten Datenverarbeitungseinrichtung (PC) und/oder an einer Kommunikationsanwendung (APPL) einer Datenverarbeitungseinrichtung (PC) eingegeben wird.

5. Verfahren nach Anspruch 4, wobei an die Vermittlungsanlage (PBX) eine CTI-Applikation (CTIA) und an die CTI-Applikation (CTIA) wiederum die Datenbank (DB) zur Speicherung der Zuordnungstabelle (ZTAB) gekoppelt wird.

6. Verfahren nach Anspruch 5, wobei infolge einer Initiierung der Verbindung (V) über die Vermittlungsanlage (PBX) die CTI-Applikation (CTIA) über die aufzubauende Verbindung (V) mittels einer CTI-Meldung informiert wird, wobei die CTI-Meldung zur CTI-Applikation (CTIA) im Rahmen einer Aufrufverbindung (I) von der Vermittlungsanlage (PBX) zu der Datenverarbeitungseinrichtung (PC) erfolgt.

7. Verfahren nach Anspruch 6, wobei durch die CTI-Applikation (CTIA) eine Meldung zusammen mit ermittelten, zur Anzeige an der Datenverarbeitungseinrichtung (PC) vorgesehenen Informationen zu der Kommunikationsanwendung (APPL) der Datenverarbeitungseinrichtung (PC) im Rahmen der Aufrufverbindung (I) übermittelt wird und in einem Anwendungsfenster (APPLWIN) der aktivierten Kommunikationsanwendung (APPL) daraufhin die Adressinformation (RUNO) sowie ein leeres Namenseingabefeld (NAMEF) auf einem Monitor (M) der zugeordneten Datenverarbeitungseinrichtung (PC) angezeigt wird.

8. Verfahren nach Anspruch 7, wobei nach dem Speichern der endgeräteindividuellen Information (NAME) und der Adress-information (RUNO) über die Aufrufverbindung (I) an die Vermittlungsanlage (PBX) die endgeräteindividuelle Information (NAME) übermittelt wird und die Vermittlungsanlage (PBX) diese Information (NAME) zur ersten Kommunikationsendeinrichtung (EG1, PC) zur Anzeige an einem Display (D) der ersten Kommunikationsendeinrichtung (EG1, PC) übermittelt.

9. Verfahren nach einem der vorhergehenden Ansprüche, wobei die eingegebene, übermittelte, geänderte und/oder ergänzte endgeräteindividuelle Information (NAME) an der weiteren Kommunikationsendeinrichtung visuell und/oder akustisch ausgegeben wird.

10. Verfahren nach einem der vorhergehenden Ansprüche, wobei die Eingabe und/oder die weitere Eingabe mittels eines Text- oder Spracheingabemittels durchgeführt wird.

11. Verfahren nach einem der vorhergehenden Ansprüche, wobei geprüft wird, ob die zweite Kommunikationsendeinrichtung (EG2) eine Kommunikationsendeinrichtung des Kommunikationssystems ist, und bei positivem Prüfergebnis das Zuordnen von endgeräteindividuellen Informationen (NAME) zu Adressinformationen (RUNO) unterdrückt wird.

12. Verfahren nach einem der vorhergehenden Ansprüche, wobei die angezeigte endgeräteindividuelle Information (NAME) gegenüber anderen Ausgabe-Informationen unterscheidbar ausgegeben werden.

13. Verfahren nach einem der vorhergehenden Ansprüche, wobei in der Zuordnungstabelle (ZTAB) eine vorgegebene Zeitinformation zusammen mit der endgeräteindividuellen Information (NAME) gespeichert wird, und dass nach Ablauf der vorgegebenen Zeitdauer die zugehörige endgeräteindividuellen Information (NAME) gelöscht oder markiert angezeigt wird.

14. Kommunikationssystem zum Zuordnen einer endgeräteindividuellen Information (NAME) zu einer Adressinformation (RUNO) an einer ersten Kommunikationsendeinrichtung (EG1, PC) des Kommunikationssystems, wobei das Kommunikationssystem eine Rufweiterleitungsvorrichtung in Form einer Vermittlungsanlage (PBX), eines Routers oder eines Gatekeepers und eine Datenbank (DB) zur Speicherung einer Zuordnungstabelle (ZTAB) umfasst,
**dadurch gekennzeichnet,**
**dass** Mittel zur Durchführung des Verfahrens gemäß einem der vorhergehenden Verfahrensansprüche vorgesehen sind.

15. Verwendung einer ersten Kommunikationsendeinrichtung (EG1, PC) zum Zuordnen einer endgeräteindividuellen Information (NAME) zu einer Adressinformation (RUNO) an der ersten Kommunikationsendeinrichtung (EG1, PC) eines Kömmunikationssystems gemäß einem der vorhergehenden Verfahrensansprüche.

## Claims

1. A method for assigning a piece of information (NAME) to address information (RUNO) on a first communications terminal (EG1, PC) of a communications system, wherein the communications system comprises a call distribution device in the form of an exchange system (PBX), a router or a gatekeeper, an exchange system database (PBXDB) and an additional database (DB), coupled via a CTI application to the exchange system (PBX), in which data for communications terminals (EG1, PC) that are within the exchange system are stored, **characterized in that** in the additional database, data are stored in the form of an assignment table (ZTAB), which assigns the address information (RUNO) for communications terminals (EG2) from outside the exchange to corresponding terminal-specific information (NAME), in which
- when a connection (V) is established between a second communications terminal (EG2) and the first communications terminal (EG1, PC), the address information (RUNO) for the second communications terminal (EG2) is detected in the first communications terminal (EG1, PC) or by the call distribution device of the communications system,
- the call distribution device checks the address information (RUNO) to determine whether the second communications terminal (EG2) is a communications terminal from within or outside of the communications system,
- if the communications terminal (EG1, PC) is from within the communications system, the terminal-specific data are sent from the exchange system database (PBXDB) to the first communications terminal (EG1, PC),
- if the communications terminal (EG2) is from outside the communications system, the call distribution device establishes a query connection (Q) with the database (DB) and submits a query to the database (DB) via the query connection (Q) to search the assignment table (ZTAB) for an entry for the address information (RUNO), and
- the entry for the address information (RUNO) is displayed on the first communications terminal (EG1, PC) such that the terminalspecific information (NAME) may be modified, or may be input if the assignment table (ZTAB) does not contain an entry for the address information (RUNO), and such that once this information (NAME) has been input or modified, it may be stored together with the address information (RUNO) in the assignment table (ZTAB).

2. The method according to claim 1, wherein when a further connection is established between the second communications terminal (EG2) and the first communications terminal (EG1, PC) or an additional communications terminal, once the address information (RUNO) has been acquired in the communications system the assigned and stored terminal-specific information (NAME) is read-out and transmitted to the first communications terminal (EG1, PC) or the additional communications terminal.

3. The method according to claim 2, wherein the terminal-specific information (NAME) that has been transmitted is modified and/or enhanced by additional input into the additional communications terminal, and this modified and/or enhanced terminal-specific information is transmitted via the read/write connection (LS) to the database (DB), where it is stored in the assignment table (ZTAB) of the communications system.

4. The method according to any one of the preceding claims, wherein the terminal-specific information (NAME) is input into the first communications terminal (EG1, PC), an additional communications terminal, a data processing device (PC) assigned to the first communications terminal and/or a communications application (APPL) of a data processing device (PC).

5. The method according to claim 4, wherein a CTI application (CTIA) is coupled to the exchange system (PBX), and the database (DB) for storing the assignment table (ZTAB) is in turn coupled to the CTI application (CTIA).

6. The method according to claim 5, wherein upon initiation of the connection (V) via the exchange system (PBX), the CTI application (CTIA) is notified of the connection (V) to be established by means of a CTI message, the CTI message being forwarded to the CTI application (CTIA) as part of a call connection (I) from the exchange system (PBX) to the data processing device (PC).

7. The method according to claim 6, wherein the CTI application (CTIA) transmits a message, together with acquired information provided for display on the data processing device (PC), to the communications application (APPL) of the data processing device (PC) as part of the call connection (I), and the address information (RUNO) and a blank name input field (NAMEF) are then displayed in an application window (APPLWIN) of the activated communications application (APPL), on a monitor (M) of the assigned data processing device (PC).

8. The method according to claim 7, wherein once the terminal-specific information (NAME) and the address information (RUNO) have been stored, the terminal-specific information (NAME) is transmitted via the call connection (I) to the exchange system (PBX), and the exchange system (PBX) transmits this information (NAME) to the first communications terminal (EG1, PC) to be shown in a display (D) on the first communications terminal (EG1, PC).

9. The method according to any one of the preceding claims, wherein the input, transmitted, modified and/or enhanced terminal-specific information (NAME) is output visually and/or acoustically on the additional communications terminal.

10. The method according to any one of the preceding claims, wherein the input and/or the additional input is carried out by means of a text or voice data entry means.

11. The method according to any one of the preceding claims, wherein a check is made to determine whether the second communications terminal (EG2) is a communications terminal from within the communications system, and if the result of this check is positive, the assignment of terminal-specific information (NAME) to address information (RUNO) is suppressed.

12. The method according to any one of the preceding claims, wherein the displayed terminal-specific information (NAME) is shown such that it can be distinguished from other displayed information.

13. The method according to any one of the preceding claims, wherein a preset time interval is stored together with the terminal-specific information (NAME) in the assignment table (ZTAB), and once the preset time interval has elapsed, the assigned terminal-specific information (NAME) is deleted or is marked in the display.

14. A communications system for assigning terminal-specific information (NAME) to address information (RUNO) on a first communications terminal (EG1, PC) of the communications system, wherein the communications system comprises a call distribution device in the form of an exchange system (PBX), a router or a gatekeeper, and a database (DB) for storing an assignment table (ZTAB),
**characterized in that**
means for implementing the method according to any one of the preceding method claims are provided.

15. A use of a first communications terminal (EG1, PC) to assign terminal-specific information (NAME) to address information (RUNO) on the first communications terminal (EG1, PC) of a communications system, according to any one of the preceding method claims.

## Revendications

1. Procédé d'association d'une information (NAME) à une information d'adresse (RUNO) au niveau d'un premier terminal de communication (EG1, PC) d'un système de communication, dans lequel le système de communication comporte un dispositif de transfert d'appel sous la forme d'une installation de transmission (PBX), d'un routeur ou d'un portier, une base de données de l'installation de transmission (PBXDB) et une autre base de données (DB) couplée à l'installation de transmission (PBX) par le biais d'une application CTI,
dans laquelle base des données de terminaux de communication internes à l'installation de transmission (EG1, PC) sont enregistrées,
**caractérisé en ce que** dans l'autre base de données, des données sont enregistrées sous la forme d'un tableau d'association (ZTAB), qui associe l'information d'adresse (RUNO) de terminaux de communication externes à la transmission (EG2) à des informations propres au terminal (NAME) correspondantes,
dans lequel
- dans le cadre d'une liaison (V) entre un deuxième terminal de communication (EG2) et le premier terminal de communication (EG1, PC), l'information d'adresse (RUNO) du deuxième terminal de communication (EG2) est recueillie au niveau du premier terminal de communication (EG1, PC) ou par le dispositif de transfert d'appel du système de communication,
- dans le dispositif de transfert d'appel, il est contrôlé à l'aide de l'information d'adresse (RUNO) si le deuxième terminal de communication (EG2) est un terminal de communication interne ou externe au système de communication,
- dans le cas d'un terminal de communication interne au système de communication (EG1, PC), les données propres au terminal sont émises de la base de données de l'installation de transmission (PBXDB) au niveau du premier terminal de communication (EG1, PC),
- dans le cas d'un terminal de communication externe au système de communication (EG2), une liaison de requête (Q) à la base de données (DB) est établie par le dispositif de transfert d'appel et une requête de base de données à la base de données (DB) est arrêtée par le biais de la liaison de requête (Q) de telle sorte qu'une entrée pour l'information d'adresse (RUNO) est cherchée dans le tableau d'association (ZTAB), et
- au niveau du premier terminal de communication (EG1, PC), l'entrée pour l'information d'adresse (RUNO) est affichée de telle sorte que l'information propre au terminal (NAME) peut être modifiée ou saisie, si le tableau d'association (ZTAB) ne comporte aucune entrée pour l'information d'adresse, et qu'après saisie ou modification, cette information (NAME) est enregistrée conjointement avec l'information d'adresse (RUNO) dans le tableau d'association (ZTAB).

2. Procédé selon la revendication 1,
dans lequel dans le cadre d'un autre établissement de liaison entre le deuxième terminal de communication (EG2) et le premier terminal de communication (EG1, PC) ou un autre terminal de communication, après une saisie de l'information d'adresse (RUNO) dans le système de communication, l'information propre au terminal (NAME) enregistrée associée est lue et transmise au premier terminal de communication (EG1, PC) ou à l'autre terminal de communication.

3. Procédé selon la revendication 2,
dans lequel au niveau de l'autre terminal de communication, l'information propre au terminal (NAME) transmise est modifiée et/ou complétée par une autre saisie et cette information propre au terminal modifiée et/ou complétée est transmise à la base de données (DB) par le biais de la liaison de lecture/écriture (LS) et enregistrée dans le tableau d'association (ZTAB) du système de communication.

4. Procédé selon l'une quelconque des revendications précédentes,
dans lequel l'information propre au terminal (NAME) est saisie au niveau du premier terminal de communication (EG1, PC), d'un autre terminal de communication, d'un dispositif de traitement de données (PC) associé au premier terminal de communication et/ou au niveau d'une application de communication (APPL) d'un dispositif de traitement de données (PC).

5. Procédé selon la revendication 4, dans lequel une application CTI (CTIA) est couplée à l'installation de transmission (PBX) et la base de données (DB) est couplée à son tour à l'application CTI (CTIA) pour l'enregistrement du tableau d'association (ZTAB).

6. Procédé selon la revendication 5, dans lequel suite à une initialisation de la liaison (V) par le biais de l'installation de transmission (PBX), l'application CTI (CTIA) est informée de la liaison (V) à établir au moyen d'un message CTI, dans lequel le message CTI pour l'application CTI (CTIA) se fait dans le cadre d'une liaison d'appel (I) de l'installation de transmission (PBX) au dispositif de traitement de données (PC).

7. Procédé selon la revendication 6, dans lequel un message est transmis conjointement avec des informations déterminées, prévues pour être affichées au niveau du dispositif de traitement de données (PC) à l'application de communication (APPL) du dispositif de traitement de données (PC) dans le cadre de la liaison d'appel (I) par l'application CTI (CTIA) et l'information d'adresse (RUNO) ainsi qu'un champ de saisie de nom vide (NAMEF) s'affichent ensuite dans une fenêtre d'application (APPLWIN) de l'application de communication activée (APPL) sur un moniteur (M) du dispositif de traitement de données (PC) associé.

8. Procédé selon la revendication 7, dans lequel après l'enregistrement de l'information propre au terminal (NAME) et de l'information d'adresse (RUNO), l'information propre au terminal (NAME) est transmise à l'installation de transmission (PBX) par le biais de la liaison d'appel (I) et l'installation de transmission (PBX) transmet cette information (NAME) au premier terminal de communication (EG1, PC) pour être affichée au niveau d'un écran (D) du premier terminal de communication (EG1, PC).

9. Procédé selon l'une quelconque des revendications précédentes,
dans lequel l'information propre au terminal (NAME) saisie, transmise, modifiée et/ou complétée est émise visuellement et/ou acoustiquement au niveau de l'autre terminal de communication.

10. Procédé selon l'une quelconque des revendications précédentes,
dans lequel la saisie et/ou l'autre saisie est réalisée à l'aide d'un moyen de saisie vocale ou de texte.

11. Procédé selon l'une quelconque des revendications précédentes,
dans lequel il est contrôlé si le deuxième terminal de communication (EG2) est un terminal de communication du système de communication et en cas de résultat de contrôle positif, l'association d'informations propres au terminal (NAME) aux informations d'adresse (RUNO) est supprimée.

12. Procédé selon l'une quelconque des revendications précédentes,
dans lequel l'information propre au terminal (NAME) affichée est émise de manière à pouvoir la distinguer des autres informations émises.

13. Procédé selon l'une quelconque des revendications précédentes,
dans lequel une information de temps prédéfinie est enregistrée conjointement avec l'information propre au terminal (NAME) dans le tableau d'association (ZTAB) et qu'après écoulement de la durée de temps prédéfinie, l'information propre au terminal (NAME) associée est effacée ou marquée.

14. Système de communication pour l'association d'une information propre au terminal (NAME) à une information d'adresse (RUNO) au niveau d'un premier terminal de communication (EG1, PC) du système de communication, dans lequel le système de communication comporte un dispositif de transfert d'appel sous la forme d'une installation de transmission (PBX), d'un routeur ou d'un portier et une base de données (DB) pour l'enregistrement d'un tableau d'association (ZTAB),
**caractérisé en ce**
**que** des moyens sont prévus pour la réalisation du procédé selon l'une quelconque des revendications précédentes.

15. Utilisation d'un premier terminal de communication (EG1, PC) pour l'association d'une information propre au terminal (NAME) à une information d'adresse (RUNO) au niveau du premier terminal de communication (EG1, PC) d'un système de communication conformément à l'une quelconque des revendications de procédé précédentes.
